# EUROPÄISCHE PATENTANMELDUNG

(11) **EP 1 069 492 A2**
(43) Veröffentlichungstag der Anmeldung: **17.01.2001**
(21) Anmeldenummer: 00250184.9
(22) Anmeldetag: 09.06.2000
(51) Int. Cl.: G06F 1/00

(54) **Sicherheitsmodul zur Überwachung der Systemsicherheit und Verfahren**

(30) Priorität: 15.06.1999 DE 19928061
(71) Anmelder: Francotyp-Postalia Aktiengesellschaft & Co., 16547 Birkenwerder (DE)
(72) Erfinder: Günther, Stephan, 13456 Berlin (DE); Rosenau, Dirk, 13469 Berlin (DE)

(57) **Zusammenfassung**

Die Erfindung betrifft ein Sicherheitsmodul zur Überwachung der Systemsicherheit, mit einem Mikroprozessor (120), der mit weiteren Funktionseinheiten verschaltet ist, wobei der Mikroprozessor (120) zur überlappenden Verarbeitung mit zwischenzeitlich stattfindender Validierung des Systemzustands programmiert ist und zur Signalisierung des Modulzustandes ein Signalmittel (107, 108) ansteuert.

## Beschreibung

Die Erfindung betrifft ein Sicherheitsmodul zur Überwachung der Systemsicherheit, gemäß der im Oberbegriff des Anspruchs 1 angegebenen Art und für ein Verfahren zur Überwachung der Systemsicherheit gemäß der im Oberbegriff des Anspruchs 13 angegebenen Art. Ein solcher postalischer Sicherheitsmodul ist insbesondere für den Einsatz in einer Frankiermaschine bzw. Postbearbeitungsmaschine oder Computer mit Postbearbeitungsfunktion geeignet.

Es sind vielfältige Sicherungsmaßnahmen zum Schutz gegen Ausfälle bzw. Störungen als auch zur Bereitstellung einer 100%-tigen Verfügbarkeit von intelligenten elektronischen Systemen bekannt. Beispielsweise werden Parallelrechnersysteme für extrem hohe Sicherheitsanforderungen (Flugverkehr etc.) eingesetzt, eher für low-level Anwendungen werden z. B. gespeicherte Ergebnisse redundant ausgeführt konzipiert, um so die Möglichkeit des Erkennens einer Fehlfunktion bzw. eines Ausfalls sowie ggf. auch die Möglichkeit zur Korrektur zu schaffen. Vielfach sind die einzelnen Sicherungsmaßnahmen sehr unterschiedlicher Natur (z. B. Kombinationen von Hard- und Software) und müssen dem jeweiligen Erfordernis der (evtl. auch nur partiell erforderlichen) Sicherheit eines Systems angepaßt werden, was zu entsprechend vielen dedizierten Einzellösungen führt, die durch ihren individuellen Charakter hohe Design- und - unter Umständen - auch Realisierungskosten verursachen.

Es ist bereits aus EP 417 447 B1 bekannt, in elektronischen Datenverarbeitungsanlagen besondere Module einzusetzen und mit Mitteln zum Schutz vor einem Einbruch in ihre Elektronik auszustatten. Solche Module werden nachfolgend Sicherheitsmodule genannt.

Moderne Frankiermaschinen, oder andere Einrichtungen zum Frankieren von Postgut, sind mit einem Drucker zum Drucken des Postwertstempels auf das Postgut, mit einer Steuerung zum Steuern des Druckens und der peripheren Komponenten der Frankiermaschine, mit einer Abrecheneinheit zum Abrechnen von Postgebühren, die in nichtflüchtigen Speichern gehalten werden, und einer Einheit zum kryptografischen Absichern der Postgebührendaten ausgestattet. Die Abrecheneinheit und/oder die Einheit zum Absichern des Druckens der Postgebührendaten kann von einem Sicherheitsmodul realisiert werden (EP 789 333 A2). Der Prozessor des Sicherheitsmoduls ist beispielsweise ein OTP (One Time Programmable), welcher sensible Daten, wie kryptografische Schlüssel, auslesesicher speichert. Eine Kapselung durch ein Sicherheitsgehäuse bietet einen weiteren Schutz.

Weitere Maßnahmen zum Schutz eines Sicherheitsmoduls vor einem Angriff auf die in ihm gespeicherten Daten wurden auch in den nicht vorveröffentlichten deutschen Anmeldungen 198 16 572.2 8 mit dem Titel: 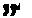 Anordnung für ein Sicherheitsmodul", 198 16 571.4 mit dem Titel: 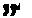 Anordnung für den Zugriffsschutz für Sicherheitsmodule", 199 12 780. 8 mit dem Titel: 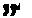 Anordnung für ein Sicherheitsmodul", 199 12 781.6 mit dem Titel: 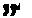 Verfahren zum Schutz eines Sicherheitsmoduls und Anordnung zur Durchführung des Verfahrens" und die deutsche Gebrauchsmusteranmeldung 299 05 219.2 mit dem Titel: 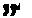 Sicherheitsmodul mit Statussignalisierung" vorgeschlagen. Gerade ein steckbares Sicherheitsmodul kann in seinem Lebenszyklus verschiedene Zustände einnehmen. Es kann nun unterschieden werden, ob das Sicherheitsmodul funktioniert oder defekt ist. Auf die Nichtmanipulierbarkeit der hardwaremäßigen Abrechnung wird ohne weitere Kontrolle vertraut. Jede andere softwaregesteuerte Arbeitsweise gilt nur mit den Orginalprogrammen als fehlerfrei, welche deshalb vor einer Manipulation geschützt werden müssen.

Der Erfindung liegt die Aufgabe zugrunde, für ein Sicherheitsmodul eine maximale Sicherheit zu erzielen. Es soll ein Verfahren gefunden werden, welches mit minimalen Aufwänden eine maximale Sicherheit für definierbare Bereiche und Funktionen eines Systems ermöglicht, und welches universell, d. h. mit nur minimalem Anpassungsaufwand, auf unterschiedlichste elektronische Systeme angewendet werden kann. Das Verfahren soll beispielsweise in Frankiermaschinen Anwendung finden, für die besondere Sicherheitsforderungen gelten, da die geldwerten Abrechnungsdaten unmanipulierbar sein müssen.

Die Aufgabe wird mit den Merkmalen des Anspruchs 1 für eine Anordnung und mit den Merkmalen des Anspruchs 13 für ein Verfahren gelöst.

Durch eine zeitlich wiederholend überprüfte Integrität des Systems wird die Sicherheit des elektronischen Systems gewährleistet. Ein modularer Aufbau des Sicherheitsverfahrens sieht eine zweistufige, überlappende Prüfung vor, die grundsätzlich zwischen statischen und dynamischen Zuständen des Systems unterscheidet. Die in Speicherbereichen nichtflüchtig gespeicherte Daten, Funktionen und Pattern sind geeignet einen Systemzustand abzubilden. Vorbestimmte Subbereiche des Speichers können bestimmten Datenverarbeitungseinheiten zugeordnet werden und die darin gespeicherten Daten schaffen eine Abbildung, welche für den erreichten Zustand des Systems kennzeichnend ist. Vorbestimmte Subbereiche des Speichers können bestimmten Abbildungen zugeordnet werden, die zeitlich nacheinander erreicht werden.
Die Validierung eines Systemzustands bei dynamischen Änderungen beruht auf der überlappenden Verarbeitung von Daten aus mindestens Teilen des verwendeten Prüfpattern, Funktionsumfanges oder Speicherbereiches einzeln oder in Kombination miteinander. Die überlappende Verarbeitung besteht in einem gegenseitigem Vertauschen der von der einen bestimmten Datenverarbeitungseinheit gelieferten Daten und der von einer anderen bestimmten Datenverarbeitungseinheit gelieferten Daten und in einer Ausführung jeweils einer redundanten Sicherheitsfunktion auf die vertauschten Daten durch beide Datenverarbeitungseinheiten. Die Ergebnisse der redundanten Datenverarbeitung müssen bei einem unmanipulierten und fehlerfrei arbeitenden System vergleichbar sein.
Ein Sicherheitsmodul für eine Datenverarbeitungsanlage, beispielsweise eine Frankiermaschine, nimmt deren Funktion, beispielsweise einer Abrechnung der Postgebühren und/oder deren kryptografische Absicherung war. Das Sicherheitsmodul hat einen Modulprozessor und eine Hardware-Abrecheneinheit. Das Sicherheitsmodul ist erfindungsgemäß durch eigene Signalmittel gekennzeichnet, die bei direkter Ansteuerung vom Prozessor des Sicherheitsmoduls eine Aussage über den aktuellen Zustand des Sicherheitsmoduls gestatten. Die Signalisierung des Modulzustandes wird nur bei Versorgung des Sicherheitsmoduls mit Systemspannung aktiviert, um eine interne Batterie zu schonen. Der Prozessor kann auch die Arbeit der Hardware-Abrecheneinheit überwachen oder überprüfen. Es ist nicht beabsichtigt, die Abrechnung selbst auf Richtigkeit nachzuprüfen. Auch kann durch einen 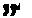 Pattern"-Vergleich eines definierbaren Speicherbereichs keine Rückwärtsabbildung der Postregister erreicht werden, da die Prüfsummen über die Daten des gesamten sicherheitsrelevanten Speicherbereichs gebildet werden. Denn es steht nicht die System-Verfügbarkeit im Vordergrund, sondern die sichere Erkennung von Fehlfunktionen oder Ausfällen sowie eine geeignete Reaktion darauf, wie es bei besonders sicherheitssensitiven, eher zeitunkritischen Vorgängen der Fall ist.

Vorteilhafte Weiterbildungen der Erfindung sind in den Unteransprüchen gekennzeichnet bzw. werden nachstehend zusammen mit der Beschreibung der bevorzugten Ausführung der Erfindung anhand der Figuren näher dargestellt. Es zeigen:
- Figur 1,: Perspektivische Ansicht der Frankiermaschine von hinten,
- Figur 2,: Blockschaltbild des Sicherheitsmoduls,
- Figur 3,: Seitenansicht des Sicherheitsmoduls,
- Figur 4,: Draufsicht auf das Sicherheitsmodul,
- Figur 5,: Tabelle für Statussignalisierung,
- Figur 6,: Darstellung der Prüfung der Integrität des Systems für statische und dynamisch änderbare Zustände,
- Figur 7,: Flußdiagramm für die Prüfung der Integrität des Systems,
- Figur 8,: Darstellung der statischen Prüfung,
- Figur 9 und 10,: Darstellung der überlappenden Verarbeitung.

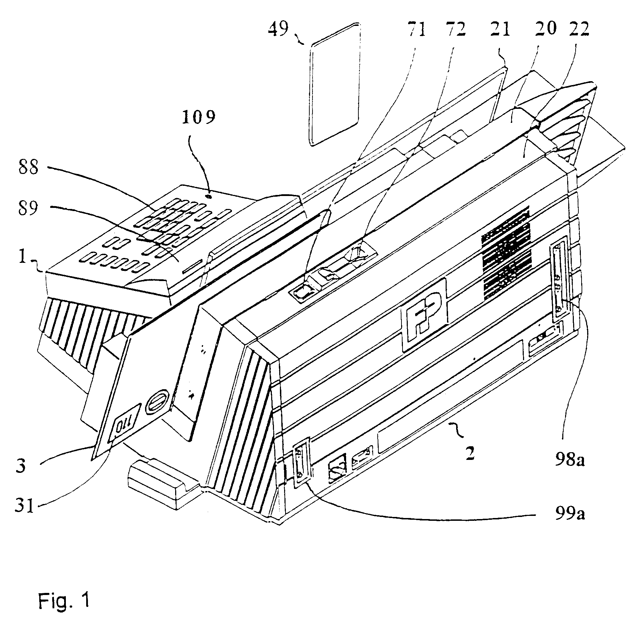

In der Figur 1 ist eine perspektivische Ansicht der Frankiermaschine von hinten dargestellt. Die Frankiermaschine besteht aus einem Meter 1 und einer Base 2. Letztere ist mit einer Chipkarten-Schreib/ Leseeinheit 70 ausgestattet, die hinter der Führungsplatte 20 angeordnet und von der Gehäuseoberkante 22 zugänglich ist. Nach dem Einschalten der Frankiermaschine mittels dem Schalter 71 wird eine Chipkarte 49 von oben nach unten in den Einsteckschlitz 72 eingesteckt. Ein zugeführter auf der Kante stehender Brief 3, der mit seiner zu bedruckenden Oberfläche an der Führungsplatte anliegt, wird dann entsprechend der Eingabedaten mit einem Frankierstempel 31 bedruckt. Die Briefzuführöffnung wird durch eine Klarsichtplatte 21 und die Führungsplatte 20 seitlich begrenzt.

Das Modul wird auf die Hauptplatine des Meters der Frankiermaschine oder eines anderen geeigneten Gerätes gesteckt. Es ist vorzugsweise innerhalb des Metergehäuses untergebracht, welches als Sicherheitsgehäuse ausgebildet ist. Das Metergehäuse ist dabei vorteilhaft so konstruiert, daß der Benutzer die Statusanzeige des Sicherheitsmoduls trotzdem von außen durch eine Öffnung 109 sehen kann, wobei sich die Öffnung 109 zur Bedienoberfläche 88, 89 des Meters 1 erstreckt.
Die Anzeige wird direkt vom modulinternen Prozessor gesteuert und ist so von außen nicht ohne weiteres manipulierbar. Die Anzeige ist im Betriebszustand ständig aktiv, so daß das Anlegen der Systemspannung Us+ an den Prozessor des Sicherheitsmoduls ausreicht, die Anzeige zu aktivieren, um den Modulzustand ablesen zu können.

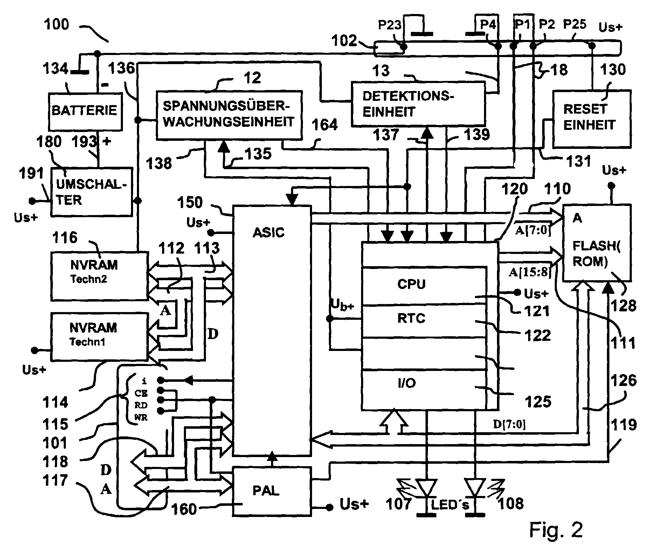

Die Figur 2 zeigt ein Blockschaltbild des postalischen Sicherheitsmoduls PSM 100 in einer bevorzugten Variante. Der negative Pol der Batterie 134 ist auf Masse und einen Pin P23 der Kontaktgruppe 102 gelegt. Der positive Pol der Batterie 134 ist über die Leitung 193 mit dem einen Eingang des Spannungsumschalters 180 und die Systemspannung führende Leitung 191 ist mit dem anderen Eingang des Spannungsumschalters 180 verbunden. Als Batterie 134 eignet sich der Typ SL-389/P für eine Lebensdauer bis zu 3,5 Jahren oder der Typ SL-386/P für eine Lebensdauer bis zu 6 Jahren bei einem maximalen Stromverbrauch durch das PSM 100. Als Spannungsumschalter 180 kann ein handelsüblicher Schaltkreis vom Typ ADM 8693ARN eingesetzt werden. Der Ausgang des Spannungsumschalters 180 liegt über die Leitung 136 an einer Spannungsüberwachungseinheit 12 und einer Detektionseinheit 13 an. Die Spannungsüberwachungseinheit 12 und die Detektionseinheit 13 stehen mit den Pins 1, 2, 4 und 5 des Prozessors 120 über die Leitungen 135, 164 und 137, 139 in Kommunikationsverbindung. Der Ausgang des Spannungsumschalters 180 liegt über die Leitung 136 außerdem am Versorgungseingang eines ersten Speichers SRAM an, der durch die vorhandene Batterie 134 zum nichtflüchtigen Speicher NVRAM 116 einer ersten Technologie wird.
Das Sicherheitsmodul steht mit der Frankiermaschine über den Systembus 115, 117, 118 in Verbindung. Der Prozessor 120 kann über den Systembus und ein Modem 83 in Kommunikationsverbindung mit einer entfernten Datenzentrale eintreten. Die Abrechnung wird vom ASIC 150 vollzogen. Die postalischen Abrechnungsdaten werden in nichtflüchtigen Speichern unterschiedlicher Technologie gespeichert.
Am Versorgungseingang eines zweiten Speichers NV-RAM 114 liegt Systemspannung an. Hierbei handelt es sich um einen nichtflüchtigen Speicher NVRAM einer zweiten Technologie, (SHADOW-RAM). Diese zweiten Technologie umfaßt vorzugsweise ein RAM und ein EEPROM, wobei letzteres die Dateninhalte bei Systemspannungsausfall automatisch übernimmt. Der NVRAM 114 der zweiten Technologie ist mit den entsprechenden Adress- und Dateneingängen des ASIC's 150 über einen internen Adreß- und Datenbus 112, 113 verbunden.

Der ASIC 150 enthält mindestens eine Hardware-Abrecheneinheit für die Berechnung der zu speichernden postalischen Daten. In der Programmable Array Logic (PAL) 160 ist eine Zugriffslogik für den ASIC 150 untergebracht. Der ASIC 150 wird durch die Logik PAL 160 gesteuert.
Ein Adreß- und Steuerbus 117, 115 von der Hauptplatine des Meters 1 ist an entsprechenden Pins der Logik PAL 160 angeschlossen und die PAL 160 erzeugt mindestens ein Steuersignal für das ASIC 150 und ein Steuersignal 119 für den Programmspeicher FLASH 128. Der Prozessor 120 arbeitet ein Programm ab, das im FLASH 128 gespeichert ist. Der Prozessor 120, FLASH 28, ASIC 12 und PAL 160 sind über einen modulinternen Systembus miteinander verbunden, der Leitungen 110, 111, 126, 119 für Daten-, Adreß- und Steuersignale enthält.

Die RESET-Einheit 130 ist über die Leitung 131 mit dem Pin 3 des Prozessors 120 und mit einem Pin des ASIC's 150 verbunden. Der Prozessor 120 und das ASIC 150 werden bei Absinken der Versorgungsspannung durch eine Resetgenerierung in der RESET-Einheit 130 zurückgesetzt.

Der Prozessor 120 weist intern eine Verarbeitungseinheit CPU 121, eine Echtzeituhr RTC 122 eine RAM-Einheit 124 und eine Ein/Ausgabe-Einheit 125 auf. Der Prozessor 120 des Sicherheitsmoduls 100 ist über einen modul-internen Datenbus 126 mit einem FLASH 128 und mit dem ASIC 150 verbunden. Der FLASH 128 dient als Programmspeicher und wird mit Systemspannung Us+ versorgt. Er ist beispielsweise ein 128 Kbyte-FLASH-Speicher vom Typ AM29F010-45EC. Der ASIC 150 des postalischen Sicherheitsmoduls 100 liefert über einen modulinternen Adreßbus 110 die Adressen 0 bis 7 an die entsprechenden Adreßeingänge des FLASH 128. Der Prozessor 120 des Sicherheitsmoduls 100 liefert über einen internen Adreßbus 111 die Adressen 8 bis 15 an die entsprechenden Adresseingänge des FLASH 128. Der ASIC 150 des Sicherheitsmoduls 100 steht über die Kontaktgruppe 101 des Interfaces mit dem Datenbus 118, mit dem Adreßbus 117 und dem Steuerbus 115 der Hauptplatine des Meters 1 in Kommunikationsverbindung.

Der Spannungsumschalter 180 gibt als Ausgangsspannung auf der Leitung 136 für die Spannungsüberwachungseinheit 12 und Speicher 116 diejenige seiner Eingangsspannungen weiter, die größer als die andere ist. Durch die Möglichkeit, die beschriebene Schaltung in Abhängigkeit von der Höhe der Spannungen Us+ und Ub+ automatisch mit der größeren von beiden zu speisen, kann während des Normalbetriebs die Batterie 134 ohne Datenverlust gewechselt werden. Die Echtzeituhr RTC 122 und der Speicher RAM 124 werden von einer Betriebsspannung über die Leitung 138 versorgt. Diese Spannung wird von der Spannungsüberwachungseinheit 12 erzeugt.

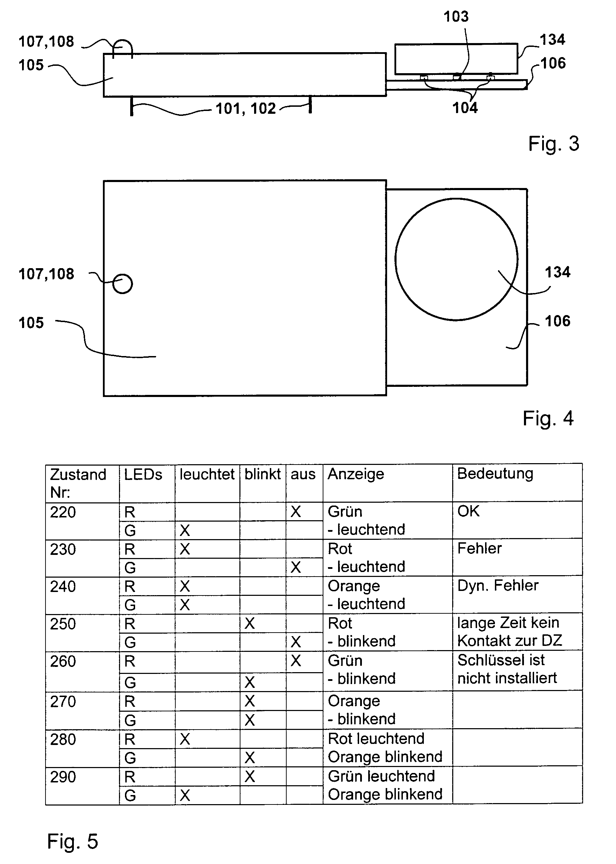

Die Batterie der Frankiermaschine speist in den Ruhezeiten außerhalb des Normalbetriebes in vorerwähnter Weise die Echtzeituhr 122 mit Datums und/oder Uhrzeitregistern und/oder den statischen RAM (SRAM) 124, der sicherheitsrelevante Daten hält. Sinkt die Spannung der Batterie während des Batteriebetriebs unter eine bestimmte Grenze, so wird von der Schaltung 12 der Speisepunkt für RTC und SRAM mit Masse verbunden. Das heißt, die Spannung an der RTC und am SRAM liegt dann bei 0V. Das führt dazu, daß der SRAM 124, der z.B. wichtige kryptografische Schlüssel enthält, sehr schnell gelöscht wird. Gleichzeitig werden auch die Register der RTC 122 gelöscht und die aktuelle Uhrzeit und das aktuelle Datum gehen verloren. Durch diese Aktion wird verhindert, daß ein möglicher Angreifer durch Manipulation der Batteriespannung die frankiermaschineninterne Uhr 122 anhält, ohne daß sicherheitsrelevante Daten verloren gehen. Somit wird verhindert, daß er Sicherheitsmaßnahmen, wie beispielsweise Sleeping Mode (EP 660 268 A2) oder Long Time Watchdog (wird anhand der Fig.5 noch erläutert) umgeht.

Die Schaltung der Spannungsüberwachungseinheit 12 ist beispielsweise so dimensioniert, daß jegliches Absinken der Batteriespannung auf der Leitung 136 unter die spezifizierte Schwelle von 2,6 V zum Ansprechen der Schaltung 12 führt. Gleichzeitig mit der Indikation der Unterspannung der Batterie wechselt die Schaltung 12 in einen Selbsthaltezustand, in dem sie auch bei nachträglicher Erhöhung der Spannung bleibt. Sie liefert außerdem ein Statussignal 164. Beim nächsten Einschalten des Moduls kann der Prozessor den Zustand der Schaltung abfragen (Statussignal) und damit und/oder über die Auswertung der Inhalte des gelöschten Speichers darauf schließen, daß die Batteriespannung zwischenzeitlich einen bestimmten Wert unterschritten hat. Der Prozessor kann die Überwachungsschaltung 12 zurücksetzen, d.h. "scharf" machen. Letztere reagiert auf ein Steuersignal auf der Leitung 135.

Die Leitung 136 am Eingang des Batterieobservers 12 versorgt zugleich eine Detektions-Einheit 13 mit Betriebs- oder Batteriespannung. Vom Prozessor 120 wird der Zustand der Detektions-Einheit 13 über die Leitung 139 abgefragt oder die Detektions-Einheit 13 wird vom Prozessor 120 über die Leitung 137 ausgelöst bzw. gesetzt. Nach dem Setzen wird eine statische Prüfung auf Anschluß durchgeführt. Dazu wird über eine Leitung 192 Massepotential abgefragt, welches am Anschluß P4 des Interfaces des postalischen Sicherheitsmoduls PSM 100 anliegt und nur abfragbar ist, wenn der Sicherheitsmodul 100 ordnungsgemäß gesteckt ist. Bei gesteckten Sicherheitsmodul 100 wird Massepotential des negativen Pols 104 der Batterie 134 des postalischen Sicherheitsmoduls PSM 100 auf den Anschluß P23 des Interfaces 8 gelegt und ist somit am Anschluß P4 des Interfaces über die Leitung 192 von der Detektions-Einheit 13 abfragbar.
An den Pins 6 und 7 des Prozessors 120 sind Leitungen angeschlossen, welche nur bei einem, beispielsweise an die Hauptplatine des Meters 1, gesteckten Sicherheitsmodul 100 eine Leiterschleife 18 bilden. Zur dynamischen Prüfung des Zustandes des Angeschlossenseins des postalischen Sicherheitsmoduls PSM 100 an der Hauptplatine des Meters 1 werden vom Prozessor 120 wechselnde Signalpegel in ganz unregelmäßigen Zeitabständen an die Pin's 6, 7 angelegt und über die Schleife zurückgeschleift.

Der Prozessor 120 ist mit der Ein/Ausgabe-Einheit 125 ausgestattet, deren Anschlüsse Pin's 8, 9 zur Ausgabe mindestens eines Signals zur Signalisierung des Zustandes des Sicherheitsmoduls 100 dienen. An den Pin's 8 und 9 liegen I/O-Ports der Ein/Ausgabe-Einheit 125, an welchen modulinterne Signalmittel angeschlossen sind, beispielsweise farbige Lichtemitterdioden LED's 107, 108. Diese signalisieren den Modulzustand bei einem auf die Hauptplatine des Meters 1 gesteckten Sicherheitsmoduls 100 durch eine Öffnung 109 im Metergehäuse. Die Sicherheitsmodule können in ihrem Lebenszyklus verschiedene Zustände einnehmen. So muß z.B. detektiert werden, ob das Modul gültige kryptografische Schlüssel enthält. Weiterhin ist es auch wichtig zu unterscheiden, ob das Modul funktioniert oder defekt ist. Die genaue Art und Anzahl der Modulzustände ist von den realisierten Funktionen im Modul und von der Implementierung abhängig.

Die Figur 3 zeigt zeigt den mechanischen Aufbau des Sicherheitsmoduls in Seitenansicht. Das Sicherheitsmodul ist als Multi-Chip-Modul ausgebildet, d.h. mehrere Funktionseinheiten sind auf einer Leiterplatte 106 verschaltet. Das Sicherheitsmodul 100 ist mit einer harten Vergußmasse 105 vergossen, wobei die Batterie 134 des Sicherheitsmoduls 100 außerhalb der Vergußmasse 105 auf einer Leiterplatte 106 auswechselbar angeordnet ist. Beispielsweise ist es so mit einem Vergußmaterial 105 vergossen, daß das Signalmittel 107, 108 aus dem Vergußmaterial an einer ersten Stelle herausragt und daß die Leiterplatte 106 mit der gesteckten Batterie 134 seitlich einer zweiten Stelle herausragt. Die Leiterplatte 106 hat außerdem Batteriekontaktklemmen 103 und 104 für den Anschluß der Pole der Batterie 134, vorzugsweise auf der Bestückungsseite oberhalb der Leiterplatte 106. Es ist vorgesehen, daß zum Anstecken des postalischen Sicherheitsmoduls PSM 100 auf die Hauptplatine des Meters 1 die Kontaktgruppen 101 und 102 unterhalb der Leiterplatte 106 (Leiterbahnseite) des Sicherheitsmoduls 100 angeordnet sind. Der Anwenderschaltkreis ASIC 150 steht über die erste Kontaktgruppe 101 - in nicht gezeigter Weise - mit dem Systembus einer Steuereinrichtung 1 in Kommunikationsverbindung und die zweite Kontaktgruppe 102 dient der Versorgung des Sicherheitsmoduls 100 mit der Systemspannung. Wird das Sicherheitsmodul auf die Hauptplatine gesteckt, dann ist es vorzugsweise innerhalb des Metergehäuses dergestalt angeordnet, so daß das Signalmittel 107, 108 nahe einer Öffnung 109 ist oder in diese hineinragt. Das Metergehäuse ist damit vorteilhaft so konstruiert, daß der Benutzer die Statusanzeige des Sicherheitsmoduls trotzdem von außen sehen kann. Die beiden Leuchtdioden 107 und 108 des Signalmittels werden über zwei Ausgangssignale der I/O-Ports an den Pin 8, 9 des Prozessors 120 gesteuert. Beide Leuchtdioden sind in einem gemeinsamen Bauelementegehäuse untergebracht (Bicolorleuchtdiode), weshalb die Abmaße bzw. der Durchmesser der Öffnung relativ klein bleiben kann und in der Größenordnung des Signalmittels liegt. Prinzipiell sind drei unterschiedliche Farben darstellbar (rot, grün, orange), jenachdem die LED's einzeln oder gleichzeitig angesteuert werden. Zur Zustandsunterscheidung werden die LED's auch einzeln oder zusammen blinkend ggf. abwechselnd blinkend gesteuert, so daß ein Vielzahl verschiedener Zustande unterschieden werden können, in welchem mindestens eine der LED's aktiviert wird.

In der Figur 4 ist eine Draufsicht auf das postalische Sicherheitsmodul dargestellt. Die Vergußmasse 105 umgibt quaderförmig einen ersten Teil der Leiterplatte 106, während ein zweiter Teil der Leiterplatte 106 für die auswechselbar angeordnete Batterie 134 von Vergußmasse frei bleibt. Die Batteriekontaktklemmen 103 und 104 werden hier von der Batterie verdeckt.

Gemäß einer in der Figur 5 gezeigten - sich selbst erläuternden - Tabelle für Statussignalisierung geht eine Vielzahl möglicher Zustandsanzeigen hervor. Eine grün leuchtende LED 107 signalisiert einen OK-Zustand 220, aber eine leuchtende LED 108 signalisiert einen Fehler-Zustand 230 im Ergebnis eines mindestens statischen Selbsttestes. Das Ergebnis eines solchen an sich bekannten Selbsttestes kann wegen der direkten Signalisierung über die LED's 107, 108 nicht verfälscht werden.
Beispielsweise für den Fall, daß zwischenzeitlich die im Sicherheitsmodul gespeicherten Schlüssel verloren gingen, würde die laufende Überprüfung im dynamischen Betrieb den Fehler feststellen und als den Zustand 240 mit orange leuchtenden LED's signalisieren. Nach einem Aus/Einschalten ist ein Booten erforderlich, da anderenfalls keine andere Operation mehr ausgeführt werden kann. Der Fall, daß bei der Herstel-lung die Installation eines Schlüssels vergessen wurde, wird als Zustand 260 beispielsweise mit einer grün blinkenden LED 107 signalisiert. Auch der Fall, daß ein long time watchdog-Timer abgelaufen ist, wird als Zu-stand 250 durch eine rot blinkende LED signalisiert. Der long time watchdog-Timer ist abgelaufen, wenn lange Zeit die Datenzentrale nicht mehr kontaktiert wurde, beispielsweise um ein Guthaben nachzuladen. Der Zustand 250 wird ebenfalls erreicht, wenn das Sicherheitsmodul vom Meter getrennt wurde.
Weitere Zustandsanzeigen für die Zustände 270, 280, 290 sind optional für verschiedene weitere Prüfungen vorgesehen.

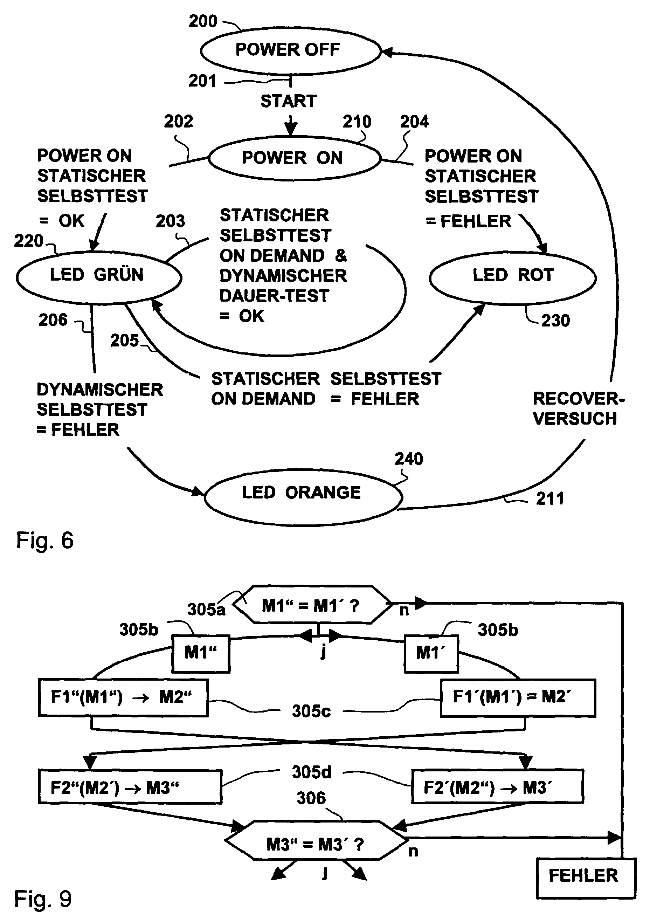

Die Figur 6 zeigt eine Darstellung der Prüfung der Integrität des Systems für statisch und dynamisch änderbare Zustände. Ein ausgeschaltetes System im Zustand 200 geht nach dem Einschalten über die Transition Start 201 in den Zustand 210 über, in welchem vom Sicherheitsmodule ein statischer Selbsttest durchgeführt wird sobald die Betriebsspannung anliegt. Bei der Transition 202, bei der der Selbsttest ein OK bei ordnungsgemäßem Ergebnis ergibt, wird der Zustand 220 LED grün leuchtend erreicht. Ausgehend von letzterem Zustand ist bei Bedarf ein wiederholter statischer Selbsttest und ein dynamischer Selbsttest durchführbar. Eine solche Transition 203 oder 206 führt entweder zurück auf den Zustand 220 LED grün bei OK oder auf den Zustand 240 LED orange bei einem Fehler. Letzterer ist durch einen Recover-Versuch evtl. durch Ausschalten (Transition 211) und Wiedereinschalten des Gerätes (Transition 201) behebbar. Statische Fehler sind aber nicht behebbar. Von Zustand 210, in welchem das eingeschaltete Gerät einen statischen Selbsttest ausführt, existiert bei einem Fehler eine Transition 204 zum Zustand 230 LED rot. Zu jeder Zeit, wenn sich das Gerät im Zustand 220 LED grün befindet, kann ein on demand ausgeführter statischer Selbsttest bei einem Fehler über eine Transition 205 zum Zustand 230 LED rot führen. Ausgehend vom Zustand 220 LED grün können nicht gezeigte weitere Transitionen 207, 208, 209 zu den weiteren Zuständen 270 (mit orange blinkenden LED's signalisiert), 280 (mit rot leuchtend/orange blinkenden LED's signalisiert) und 290 (mit grün leuchtend/orange blinkenden LED's signalisiert) führen.

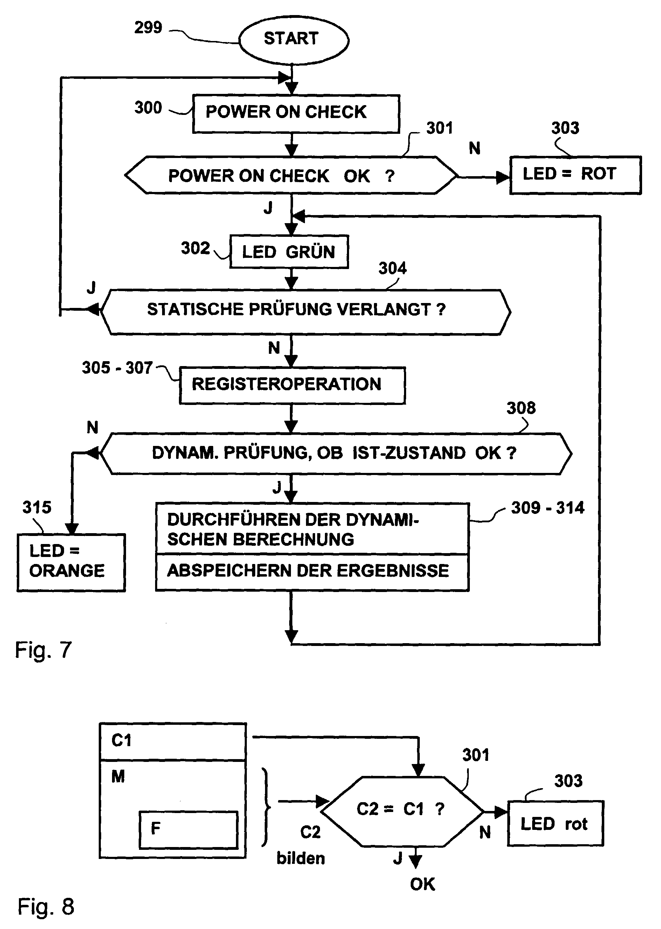

Die Figur 7 zeigt ein Flußdiagramm für die Prüfung der Integrität des Systems. Der Mikroprozessor CPU 121 ist durch ein entsprechendes im Flash 128 gespeichertes Programm programmiert, solche vorgenannten Selbsttests auszuführen, wobei nach dem Start 299, in einem ersten Schritt 300 ein Power on-Selbsttest durchgeführt und dann im Schritt 301 gefragt wird, ob der Power on-Selbsttest ein OK ergeben hat. Ist das der Fall, so wird im Schritt 302 die grüne LED 107 vom Mikroprozessor CPU 121 über ein I/O-Port 125 leuchtend gesteuert. Anderenfalls wird im Schritt 303 die rote LED 108 vom Mikroprozessor CPU 121 über ein I/O-Port 125 leuchtend gesteuert.
Vom Schritt 302 wird auf die Abfrage 304 verzweigt, in welcher geprüft wird, ob eine weitere statische Prüfung verlangt wird. Ist das der Fall, so wird zum Schritt 300 zurückverzweigt. Anderenfalls wird in den Schritten 305 - 307 mindestens eine Registeroperation durchgeführt und dann wird auf die Abfrage 308 verzweigt, in welcher geprüft wird, ob der Ist-Zustand gültig bzw. ordnungsgemäß ist. Im Verlauf der Registeroperation oder anschließend, wird eine dynamische Prüfung durchgeführt. Wenn diese nicht ordnungsgemäß verläuft oder fehlerbehaftet ist, dann wird vom Abfrageschritt 308 zum Schritt 315 verzweigt und beide, die grüne LED 107 und die rote LED 108, werden vom Mikroprozessor CPU 121 über ein I/O-Port 125 leuchtend gesteuert. Somit ergibt sich der Gesamteindruck, daß die LED's orange leuchten. Anschließend an den Abfrageschritt 308 wird bei einem zufriedenstellenden Ist-Zustand in den Schritten 309-314 eine dynamische Berechnung und nachfolgend ein Abspeichern der Ergebnisse durchgeführt. Vom letzten Schritt wird zum Schrift 302 zurückverzweigt. Dadurch ergibt sich on demand eine zweistufige Prüfung. Für die dynamische Berechnung ist es ausreichend, wenn zur Prüfung vom Mikroprozessor CPU 121 nur Teilfunktionen zeitlich versetzt auf dem gleichen oder auf einem anderen Rechenweg nachvollzogen werden, wobei selbstverständlich beide Rechenwege zum selben Überprüfungsergebnis OK oder DEFECT bzw. ERROR führen müssen.

In einem System mit dem Speicherbereich M und einer Vielzahl an Funktionen F soll ein in der Größe bzw. im Umfang definierbarer sicherheitsrelevanter Teilbereich M 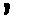 und F 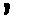 vor Fehlfunktionen und Ausfällen geschützt werden. Zu diesem Zweck werden die sicherheitsrelevanten Funktionen F 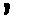 , soweit sie nicht sowieso ausschließlich auf dem Speicherbereich M 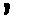 arbeiten, derart ausgebildet, daß sie eindeutige Prüfmarken (Pattern) ihrer (erfolgreichen) Wirkungsweise im System auf dem Speicherbereich M 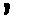 abbilden. Das Sicherheitsverfahren unterscheidet nun grundsätzlich zwischen zwei unterschiedlichen Systemzuständen: dem statischen, bei dem sich der Inhalt des Speicherbereichs M 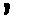 nicht verändert und dem dynamischen, bei dem eine Änderung des Speicherbereichs M 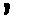 erfolgt. Das Sicherheitsverfahren ist nun zum einen dadurch gekennzeichnet, daß während des statischen Zustands in zeitlich wiederkehrender Abfolge eine Überprüfung der Integrität des Systems (genauer gesagt der Systemkomponenten M 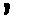 und F 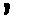 ) dadurch erfolgt, daß durch eine mathematische Einweg-Funktion (z. B. das Hash-Verfahren) ein 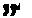 Pattern" C2 des Speicherbereichs M 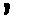 erzeugt wird, welches mit dem aktuell gültigen, gespeicherten Pattern C1 (welches erstmalig durch eine Systeminitialisierung generiert und validiert wurde) verglichen wird. Das hat den Vorteil, daß auch bei beliebig unterschiedlich langen Quellen M 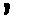 ein handhabbares Format für Cx erzeugt wird und somit eine effiziente Verarbeitung ermöglicht wird. Bei auftretender Ungleichheit der Pattern C2 und C1 während des ersten, statischen Systemzustands, wird die vorher definierte und gewünschte Reaktion durch das Sicherheitsverfahren auf eine Fehlfunktion bzw. einen Ausfall oder eine Manipulation des Systems erzeugt.
Interessant ist nun die Betrachtung der zweiten, dynamischen Systemstufe, in der sich der Speicherinhalt M 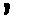 durch mindestens eine der Funktionen F 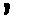 hervorgerufen, ändert. Hierbei sieht das Sicherheitsverfahren erfindungsgemäß eine überlappende Verarbeitung mit zwischenzeitlich stattfindender Validierung des Systemzustands vor. Zu diesem Zweck ist der Speicherbereich M 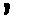 redundant ausgeführt und beinhaltet mindestens zwei sich in Art und Umfang sowie - im statischen Zustand - auch vom Inhalt her sich entsprechende Abbildungen M1 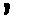 und M2 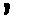 in Form von Daten, die in Subspeicherbereichen M₁' und M₂' gespeichert sind. Durch das Sicherheitsverfahren wird die Adressverwaltung der Unterbereiche M₁ 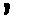 und M₂ 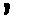 bis Mₓ 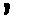 des Bereiches M 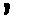 derart vorgenommen, daß mindestens immer der zuletzt aktuelle und validierte Zustand - z. B. M1 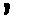 - im Speicherbereich M₁' verfügbar ist. Um einen veränderten Zustand - z. B. M2 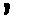 - im Speicherbereich M₂' zu validieren ist es als eine erste Möglichkeiten, insbesondere wenn eine Fremdbeeinflussung des Systems durch Dritte ausgeschlossen werden kann, vorgesehen, den aktuell verändernden Prozeß aus dem Funktionsumfang F 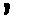 - z. B. F1 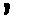 - mehrfach auszuführen, um durch zwischenzeitlich gebildete 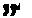 Pattern" Cx über die Daten im Bereich M₂ 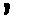 sowie den Vergleich der jeweils zwischengespeicherten Pattern-Ergebnisse, den neuen Zustand M2 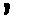 als validiert zu übernehmen und den Zustand M1 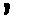 demzufolge zum Überschreiben durch die darauffolgende Veränderungen freizugeben.
Eine weitere Möglichkeit besteht darin, daß das Sicherheitsverfahren über eigene Intelligenz verfügt, um mindestens einige Funktionen aus F 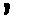 auszuführen um so im ersten Schritt ein flüchtig gespeichertes Spiegelabbild von M2 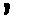 und dann im Anschluß daran das zugehörige Spiegel-Pattern Cx zwecks Vergleich mit dem 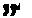 Original" zu erzeugen.

Anhand eines in der Figur 8 gezeigten Beispiels soll das Verfahren im einzelnen erläutert werden. Ein gespeichertes Pattern C1 wurde erstmalig durch eine Systeminitialisierung generiert und validiert. Durch eine mathematische Einweg-Funktion wird ein Pattern C2 des Speicherbereichs M 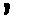 und der Funktionen F' erzeugt und Im Schritt 301 mit dem aktuell gültigen, gespeicherten Pattern C1 verglichen. Im Fehlerfall steuert der Mikroprozessor 120 die LED-Signalisierung rot leuchtend (Schrift 303).

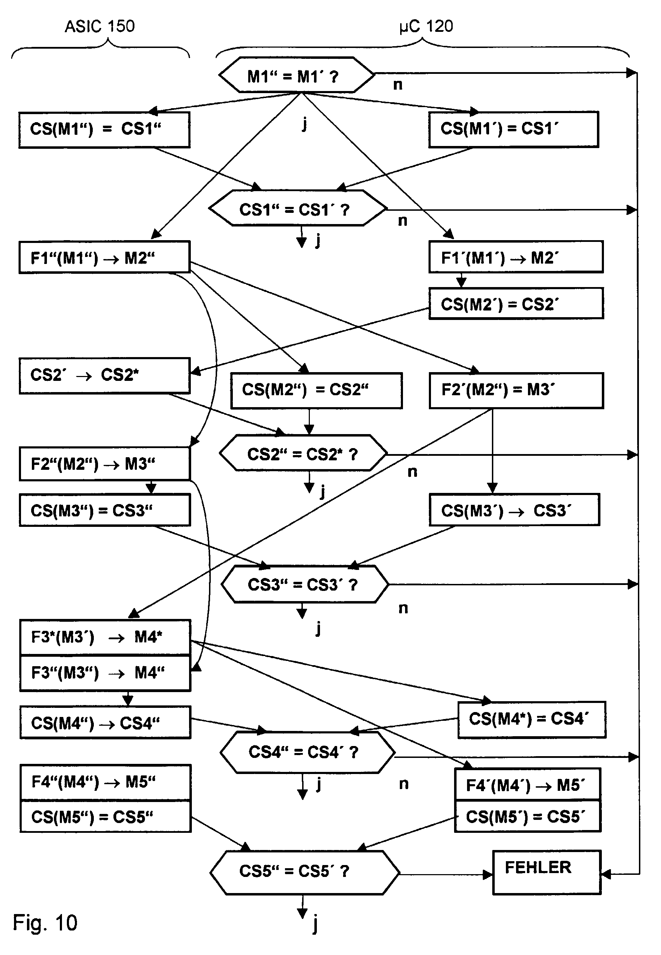

Anhand der Figur 9, welche eine Darstellung der überlappenden Verarbeitung zeigt, wird der dynamische Selbsttest erläutert. Die Schritte 305 und 306 des in der Figur 7 gezeigten Flußdiagramms für die Prüfung der Integrität des Systems können in Subschritte aufgeteilt ablaufen. Der Speicherbereich M 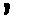 ist redundant als Speicherbereich M 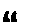 ausgeführt, wobei beide sich in Art und Umfang sowie - im statischen Zustand - auch vom Dateninhalt her entsprechen, was der Subschritt 305a verdeutlicht.
Anderenfalls liegt ein Fehler vor, d.h. die Abbildungen M1 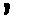 und M1 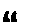 entsprechen sich nicht. Vom Subschritt 305a über den Subschritt 305b werden beide Speicherbereiche M1', M1 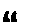 separat behandelt, indem jeweils eine Sicherheitsfunktion F1', F1 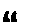 ausgeführt wird, welche den Dateninhalt verändert, so daß in Subschritten 305c die Abbildungen M2 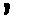 und M2 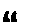 entstehen. Durch Vertauschung der Abbildungen M2 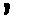 und M2 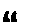 und Ausführung jeweils einer weiteren Sicherheitsfunktion F2', F2 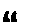 auf die vertauschten Abbildungen M2 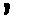 und M2 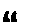 entsteht in den Subschritten 305d eine Überlappung in Form der Abbildungen M3 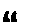 aus F2 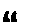 (M2 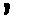 ) und M3'aus F2'(M2 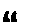 ). Im Subschritt 306 werden die Abbildungen M3 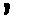 und M3 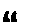 verglichen. Ein Fehler vor, wenn die Abbildungen M3' und M3 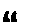 sich nicht entsprechen. Prinzipiell kann eine Vielzahl solcher Subschritte 305x mit überlappenden sicherheitsrelevanten Teilspeicherbereichen ausgeführt werden. Der Mikroprozessor 120 ist programmiert, bei dynamischen Änderungen des Systemzustands eine überlappende Verarbeitung von mindestens einem Teil des verwendeten Funktionsumfanges zur anschließenden Validierung durchzuführen und gegebenenfalls die Validierung des Systemzustands mehrfach in Zwischenschritten durchzuführen.

In der Figur 10 wird eine überlappende Verarbeitung in Kombination mit überlappenden Prüfsummen und/oder mit überlappenden Operationen gezeigt. Der dynamische Selbsttest kann entsprechend den Sicherheitsanforderungen in unterschiedlichsten Variationen ausgeführt werden. Es ist vorgesehen, daß der Mikroprozessor (120) programmiert ist, bei dynamischen Änderungen des Systemzustands eine überlappende Verarbeitung durchzuführen, von mindestens einem Teil des verwendeten Funktionsumfanges oder des verwendeten Prüfpattern. Anschließend erfolgt immer die Validierung. Es ist vorgesehen, die überlappende Verarbeitung von mindestens Teilen des verwendeten Prüfpattern, des Funktionsumfanges oder Speicherbereiches in Kombination miteinander zur anschließenden Validierung durchzuführen.

Es wird deutlich, daß sich allein durch die Ausgestaltung der Umgebung und Art des Sicherheitsverfahrens beliebig hohe Sicherheitsanforderungen realisieren lassen, die auf demselben Grundgedanken fußende unterschiedliche Ausgestaltungen zulassen. So ist beispielsweise auch durch entsprechend viele Unterbereiche Mx 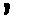 sicherzustellen, daß sich das Sicherheitsverfahren auch bei temporär sehr schnellen Prozeßpassagen nicht als Performance-Flaschenhals erweist. Eine weitere vorteilhafte Ausgestaltung der Idee beruht darin, daß Veränderungen von Unterbereichen von Mₓ 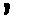 , Mₓ 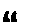 , Mₓ' 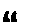 ,...,Mₓ* nur nach Anforderung einer Schreiberlaubnis an das Sicherheitsverfahren ausgeführt werden können.
Es ist weiterhin vorteilhaft, daß zur Ausführung des Sicherheitsverfahrens der bereits vorhandene Systemprozessor genutzt wird, was jedoch nicht ausschließt, daß auch das gesamte Sicherheitsverfahren in 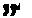 Silicon" gegossen als ASIC realisierbar ist oder, bei besonders hohen Sicherheitsanforderungen, das Sicherheitsverfahren durch einen eigenen, besonders zugriffsgeschützten Prozessor realisiert wird.

Bemerkenswert ist, daß es das beschriebene Verfahren ermöglicht, ohne Rückschlüsse auf den vorhandenen Datenbestand oder die vorhandene Funktionalität eines elektronischen Systems zu liefern, die Validierung in punkto System-Integrität frei definierbarer Systembereiche und - funktionen lückenlos durchzuführen.

Erfindungsgemäß ist die Datenverarbeitungsanlage, insbesondere eine Frankiermaschine, jedoch kann das Sicherheitsmodul auch eine andere Bauform aufweisen, die es ermöglicht, daß es beispielsweise auf die Hauptplatine eines Personalcomputers gesteckt werden kann, der als PC-Frankierer einen handelsüblichen Drucker ansteuert.

Die Erfindung ist nicht auf die vorliegenden Ausführungsform beschränkt, da offensichtlich weitere andere Anordnungen bzw. Ausführungen der Erfindung entwickelt bzw. eingesetzt werden können, die - vom gleichen Grundgedanken der Erfindung ausgehend - von den anliegenden Schutzansprüchen umfaßt werden.

## Patentansprüche

1. Sicherheitsmodul zur Überwachung der Systemsicherheit, mit einer ersten und zweiten Datenverarbeitungseinheit (120),(150) die mit weiteren Funktionseinheiten (114, 116, 150) verschaltet sind, **gekennzeichnet dadurch**, dass ein nichtflüchtiger Speicher separate Bereiche für Daten aufweist, die von beiden Datenverarbeitungseinheiten erzeugt werden, dass die eine von der anderen Datenverarbeitungseinheit überwacht wird, wobei eine Sicherheitsfunktion ausgeführt wird und wobei bei einer dynamischen Änderung des Systemzustands die erste Datenverarbeitungseinheit (120) zur überlappenden Verarbeitung mit zwischenzeitlich stattfindender Validierung des Systemzustands programmiert ist, wobei Daten den Systemzustand abbilden und wobei die überlappende Verarbeitung in einem gegenseitigem Vertauschen der von beiden Datenverarbeitungseinheiten gelieferten Daten und in einer Ausführung jeweils einer redundanten Sicherheitsfunktion auf die vertauschten Daten durch die beiden Datenverarbeitungseinheiten besteht.

2. Sicherheitsmodul, nach Anspruch 1, **gekennzeichnet dadurch**, daß die erste Datenverarbeitungseinheit ein Mikroprozessor (120) und die zweite Datenverarbeitungseinheit zur hardwaremäßigen Abrechnung vorgesehene Funktionseinheit (150) ist, wobei der Mikroprozessor (120) die Überwachungsfunktion ausübt.

3. Sicherheitsmodul, nach Anspruch 2, **gekennzeichnet dadurch**, daß der Mikroprozessor (120) programmiert ist, bei dynamischen Änderungen des Systemzustands eine überlappende Verarbeitung von Daten von mindestens einem Teil des verwendeten Speicherbereiches zur anschließenden Validierung durchzuführen.

4. Sicherheitsmodul, nach Anspruch 2, **gekennzeichnet dadurch**, daß der Mikroprozessor (120) programmiert ist, bei dynamischen Änderungen des Systemzustands eine überlappende Verarbeitung von Funktionen von mindestens einem Teil des verwendeten Funktionsumfanges zur anschließenden Validierung durchzuführen.

5. Sicherheitsmodul, nach Anspruch 2, **gekennzeichnet dadurch**, daß der Mikroprozessor (120) programmiert ist, bei dynamischen Änderungen des Systemzustands eine überlappende Verarbeitung von Pattern von mindestens einem Teil des verwendeten Prüfpattern zur anschließenden Validierung durchzuführen.

6. Sicherheitsmodul, nach Anspruch 2, **gekennzeichnet dadurch**, daß der Mikroprozessor (120) programmiert ist, bei dynamischen Änderungen des Systemzustands eine überlappenden Verarbeitung von mindestens Teilen des verwendeten Prüfpattern, Funktionsumfanges oder Speicherbereiches in Kombination miteinander zur anschließenden Validierung durchzuführen.

7. Sicherheitsmodul, nach einem der Ansprüche 1 bis 6, **gekennzeichnet dadurch**, daß der Mikroprozessor (120) programmiert ist, die Validierung des Systemzustands mehrfach in Zwischenschritten durchzuführen.

8. Sicherheitsmodul, nach Anspruch 2, **gekennzeichnet dadurch**, daß der Mikroprozessor (120) programmiert ist, einen statischen Systemzustand wiederholend mit einem statischen Selbsttest zu überprüfen.

9. Sicherheitsmodul, nach Anspruch 2, **gekennzeichnet dadurch**, daß der Mikroprozessor (120) zur Signalisierung des Modulzustandes ein Signalmittel (107, 108) ansteuert, welches ein Bestandteil des Sicherheitsmoduls ist und durch das Vergußmaterial (105) einer Leiterplatte (106) hindurchragt und daß ein umgebendes Sicherheitsgehäuse zur Signalisierung des Modulzustandes eine Öffnung (109) aufweist.

10. Sicherheitsmodul, nach Anspruch 9, **gekennzeichnet dadurch**, daß sich die Öffnung (109) zur Bedienoberfläche (88, 89) eines Meters (1) erstreckt und daß die Abmaße bzw. der Durchmesser der Öffnung in der Größenordnung des Signalmittels liegt.

11. Sicherheitsmodul, nach einem der Ansprüche 9 bis 10, **gekennzeichnet dadurch**, daß das Signalmittel als Anzeigeeinheit realisiert ist.

12. Sicherheitsmodul, nach Anspruch 11, **gekennzeichnet dadurch**, daß die Anzeigeeinheit eine oder mehrere oder mehrfarbige Leuchtdioden (LED's) einschließt.

13. Verfahren zur Überwachung der Systemsicherheit mittels einem Sicherheitsmodul, gekennzeichnet dadurch, daß der Aufbau des Sicherheitsverfahrens eine zweistufige Prüfung mit Validierung des Systemzustandes vorsieht, wobei die grundsätzlich zwischen statischen und dynamischen Zuständen des Systems unterschieden wird und wobei eine überlappende Verarbeitung von Daten beim dynamischen Selbsttest erfolgt, bei dem durch einen Patternvergleich eines definierbaren Speicherbereichs die Integrität des Systems zeitlich wiederholend überprüft wird.

14. Verfahren, nach Anspruch 13, gekennzeichnet dadurch, daß die Validierung des Systemzustands bei dynamischen Änderungen aus der überlappenden Verarbeitung von mindestens einem Teil des verwendeten Speicherbereiches besteht.

15. Verfahren, nach Anspruch 13, gekennzeichnet dadurch, daß die Validierung des Systemzustands bei dynamischen Änderungen aus der überlappenden Verarbeitung von mindestens einem Teil des verwendeten Funktionsumfanges besteht.

16. Verfahren, nach Anspruch 13, gekennzeichnet dadurch, daß die Validierung des Systemzustands bei dynamischen Änderungen aus der überlappenden Verarbeitung von mindestens einem Teil des verwendeten Prüfpattern besteht.

17. Verfahren, nach Anspruch 13, gekennzeichnet dadurch, daß die Validierung des Systemzustands bei dynamischen Änderungen aus der überlappenden Verarbeitung von mindestens Teilen des verwendeten Prüfpattern, Funktionsumfanges oder Speicherbereiches in Kombination miteinander besteht.

18. Verfahren, nach Anspruch 13, gekennzeichnet dadurch, daß die Validierung des Systemzustands mehrfach in Zwischenschritten erfolgt.

19. Verfahren, nach Anspruch 13, **gekennzeichnet dadurch**, daß im Ergebnis der Prüfung eine Signalisierung des Modulzustandes aktiviert wird, wenn die Versorgung des Sicherheitsmoduls mit Systemspannung gewährleistet ist.

20. Verfahren, nach Anspruch 19, **gekennzeichnet dadurch**, daß die Leuchtdioden LED's zur Zustandsunterscheidung blinkend gesteuert werden.
